# EUROPEAN PATENT APPLICATION

(11) **EP 4 600 819 A1**
(43) Date of publication of application: **13.08.2025**
(21) Application number: 22961348.4
(22) Date of filing: 03.10.2022
(51) Int. Cl.: G06F 9/50, G06F 1/04

(54) **TASK SCHEDULER DEVICE, COMPUTING SYSTEM, TASK SCHEDULING METHOD, AND PROGRAM**

(71) Applicant: NIPPON TELEGRAPH AND TELEPHONE CORPORATION, Chiyoda-ku, Tokyo 100-8116 (JP)
(72) Inventor: SAITO, Shogo, Musashino-shi, Tokyo 180-8585 (JP); FUJIMOTO, Kei, Musashino-shi, Tokyo 180-8585 (JP)
(74) Representative: Dehns
(86) International application number: PCT/JP2022/036964
(87) International publication number: WO 2024/075157

(57) **Abstract**

A task scheduler device (100, 100A) includes: a dedicated instruction execution detection unit (110) that detects execution of a dedicated instruction; a dedicated instruction execution affected core identification unit (120) that identifies a logical core which operates on the same physical core as an execution core of the dedicated instruction and whose operating frequency decreases due to the execution of the dedicated instruction; a low frequency allowable process allocation determination unit (140) that makes a determination to identify a process that satisfies a predetermined performance requirement even when operating at a low frequency with respect to the logical core whose operating frequency decreases, which has been identified by the dedicated instruction execution affected core identification unit (120); and a process core allocation unit (150) that allocates the process identified by the low frequency allowable process allocation determination unit (140) to the logical core whose operating frequency decreases.

## Description

### Technical Field

The present invention relates to a task scheduler device, a computing system, a task scheduling method, and a program.

### Background Art

Applications that perform signal and media processing on a CPU (for example, virtual Radio Access Network (vRAN) L1 signal processing and Deep-Learning) make heavy use of the CPU's Single Instruction Multiple Data (SIMD) extended instruction set (for example, Intel SSE/AVX512) for high-throughput arithmetic processing.

Recent SIMD extended instruction sets consume much power and generate much heat, which temporarily slows down frequency of a core that executes the SIMD instructions (see Non-Patent Literature 1).

Peripheral technology trends in SIMD operations/(in the following description, "/" indicates "or") instructions is described below. At the academic level, there are the following arts.

Since 2019, scheduling technologies that take into account frequency degradation during execution have been proposed at the academic level.

The technology described in Non-Patent Literature 2 identifies processes that have been affected by frequency degradation due to SIMD operations, and ensures fairness by compensating through scheduling over a long period of time ("ensuring fairness").

The technology described in Non-Patent Literature 3 eliminates interference by scheduling that dedicates cores to execute SIMD instructions ("elimination of interference").

Additionally, actual use cases in the market include the following.

Typically, utilization of SIMD units is limited to offloading some processing, so this is not a major issue. For example, there have been some reports of performance degradation during secure sockets layer (SSL) encryption processing.

On the other hand, vRAN (vDU) makes full utilization of SIMD operations, which is likely to pose a challenge when trying to improve core efficiency. Here, the above vRAN (vDU) refers to a DU when base station functions are separated into a radio unit (RU)/a distributed unit (DU)/a centralized unit (CU) in a vRAN in which a base station (broad band unit: BBU) that performs radio signal processing is performed by a general-purpose server.

There is also the FlexRAN software reference platform developed by Intel (registered trademark). FlexRAN is the primary building block for Layer 1 (L1) functions of the RAN to build software-based radio base stations. Currently, FlexRAN operates all cores at low frequencies and pre-prepares CPUs that can meet performance requirements even at low frequencies.

### Citation List

### Non-Patent Literature

Non-Patent Literature 1: Intel-avx-512-instruction-set, [online], [Retrieved on September 6, 2022], Internet <URL :https://builders.intel.com/docs/networkbuilders/intel-avx-512-instruction-set-for-packet-processing-technology-guide-1617440657.pdf (p15)>
Non-Patent Literature 2: Fair Scheduling for AVX2 and AVX-512 Workloads, Mathias Gottschlag, usenix ATC 2021, [online], [Retrieved on September 6, 2022], Internet <URL: https://www.usenix.org/conference/atc21/presentation/gottschlag> Non-Patent Literature 3: Automatic Core Specialization for AVX-512 Applications, Mathias Gottschlag SYSTOR '20:Proceedings of the 13th ACM International Systems and Storage Conference, [online], [Retrieved on September 6, 2022], Internet <URL :https://dl.acm.org/doi/10.1145/3383669.3398282>

### Summary of Invention

### Technical Problem

In computer systems, the CPU on a computer (hereinafter, a server) is configured to support general-purpose instructions and dedicated instructions specialized for specific operations (SIMD operation instructions or dedicated instructions for encryption). Dedicated instructions for encryption are shown, for example, at "https://www.isus.jp/hpc/intel-advanced-encryption-standard-instructions-aes-ni/". In this configuration, when a dedicated instruction is executed, the frequency of the CPU physical core fluctuates.

### [Phenomenon of Core Operating Frequency Degradation due to SIMD Operations]

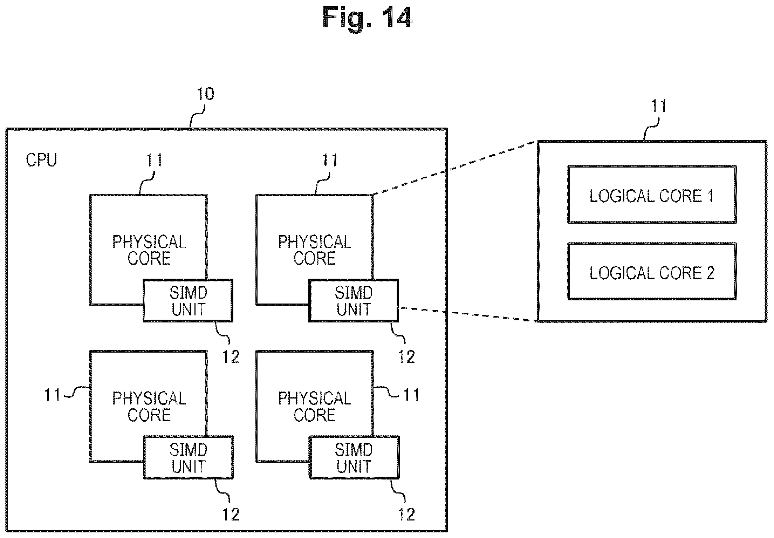

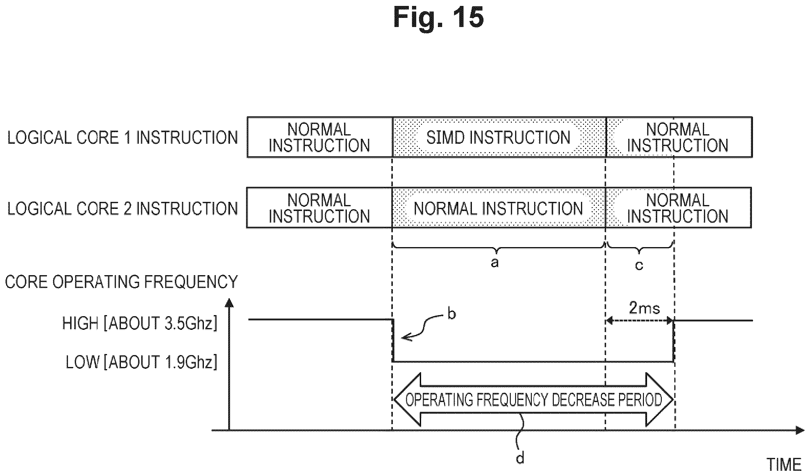

The phenomenon of a core operating frequency degradation due to SIMD operations is described with reference to Figs. 14 and 15.

Fig. 14 is a diagram illustrating a configuration of a CPU equipped with SIMD units that execute SIMD instructions.

As illustrated in Fig. 14, a CPU 10 includes four physical cores (CPU cores) 11 and SIMD units 12 installed in the four physical cores 11 and executing SIMD instructions. In the present specification, the physical core 11 is a single CPU core that simultaneously executes two or more processes.

As illustrated in an enlarged view of Fig. 14, the physical cores 11 each includes a logical core 1 and a logical core 2 so that each physical core 11 executes two threads. Because the four physical cores 11 illustrated in Fig. 14 execute two threads respectively, there are eight logical cores. That is, the total number of logical cores are the number of physical cores 11 multiplied by the number of threads that can be executed on each physical core using hardware multithreading technology (for example, Intel Hyper Threading). This hyper-threading can allow a single physical core 11 to operate like two logical cores.

Fig. 15 is a diagram illustrating executable instructions and operating frequencies of the logical core illustrated in Fig. 14. The upper diagram of Fig. 15 illustrates the executable instructions of the logical core illustrated in Fig. 14, and the lower diagram of Fig. 15 illustrates the core operating frequency when the executable instructions of the logical core are executed.

As illustrated in the upper diagram of Fig. 15, the logical core 1 instruction executes a normal instruction, a SIMD instruction, and a normal instruction. The logical core 2 instruction executes a normal instruction while the logical core 1 instruction executes the SIMD instruction (symbol a in the upper diagram of Fig. 15).

In the case of using hyper-threading that makes one physical core appear as two physical cores in a pseudo manner, an operating frequency of an SIMD extended instruction execution core (here, the logical core 1) and a logical core (here, the logical core 2) operating on the same physical core decreases (symbol b in the lower diagram of Fig. 15). For example, as illustrated in the lower diagram of Fig. 15, the core operating frequency decreases from high (about 3.5 GHz) to low (about 1.9 GHz). In addition, after the SIMD is executed, until the core operating frequency returns to the original state, the core operating frequency continues to decrease for a certain period of time (for example, 2 ms) (symbol c in the upper diagram of Fig. 15) (frequency decrease of logical core 2).

The operating frequency decrease of the logical core (here, the logical core 2) operating on the same physical core as the SIMD extended instruction execution core and the operating frequency decrease of the logical core 2 continue for a certain period of time, so that an "operating frequency decrease period" (symbol d in the lower diagram of Fig. 15) occurs. This reduces the number of instructions executed per unit time, resulting in performance fluctuations and reduced responsiveness (performance degradation of entire core).

In this way, in a case where hyper-threading is used, executing a SIMD instruction (dedicated instruction) may increase the power consumption of the core, and may lower the operating frequency of a logical core operating on the same physical core. At this time, the processing performance of the core that executes the dedicated instruction and the process scheduled on the same physical core deteriorates.

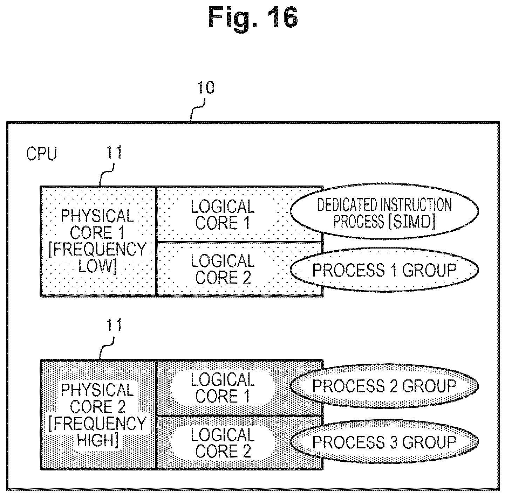

Problems with existing technologies are described in more detail with reference to Figs. 16 to 18.

### <Existing Technology 1: Ensuring Equality>

There is a technology (Existing Technology 1) for ensuring equality by allocating a certain CPU time to each process. Existing Technology 1 is implemented by, for example, Linux Completely Fair Scheduler (CFS).

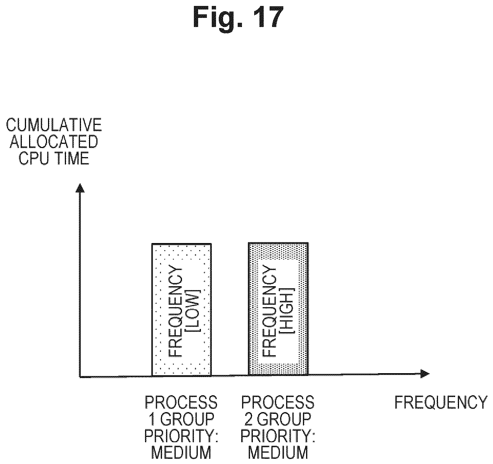

Figs. 16 and 17 are diagrams for describing Existing Technology 1. Fig. 16 is a diagram illustrating a core allocation status in a case where a CPU includes a plurality of physical cores and each of the plurality of physical cores operates like two logical cores. Fig. 17 is a diagram illustrating a cumulative allocated CPU time of a process group allocated according to the core allocation status of each physical core in Fig. 16.

As illustrated in Fig. 16, a CPU 10 includes two physical cores 11 (physical core 1 and physical core 2). Hyper-threading allows a single physical core 11 (physical core 1 and physical core 2) to operate like two logical cores (logical core 1 and logical core 2).

A logical core 1 of a physical core 11 (physical core 1) illustrated by coarse shading in Fig. 16 is a core that executes a dedicated instruction process (SIMD), and a logical core 2 is a core that executes a process 1 group that is a normal instruction. In addition, a logical core 1 of a physical core 11 (physical core 2) illustrated by fine shading in Fig. 16 is a core that executes a process 2 group that is a normal instruction, and a logical core 2 is a core that executes a process 3 group that is a normal instruction.

The physical core 11 (physical core 1 and physical core 2) does not take into account fluctuations in the operating frequency in a case where CPU time is allocated. In the example of Fig. 16, the physical core 1 has a low operating frequency, and the physical core 2 has a high operating frequency.

In Existing Technology 1, while equality is ensured by allocating a certain CPU time to each process, "Requirement 1: the CPU processing time required by each process is allocated" is not satisfied because the fluctuations in the operating frequency are not considered.

That is, as illustrated in Fig. 17, because the process 1 group and the process 2 group have the same "medium" priority, the CPU time having the same length is allocated. However, the process 1 group and the process 2 group have different frequencies. Since the CPU time of the same length is allocated to the process 1 group and the process 2 group, the processing performance may not be satisfied depending on the performance characteristics for the frequency of each process.

In Existing Technology 1, there is a problem in that it is not possible to minimize the number of execution cores by allocating processes in consideration of fluctuations in the operating frequency.

### <Existing Technology 2: Static Core Allocation>

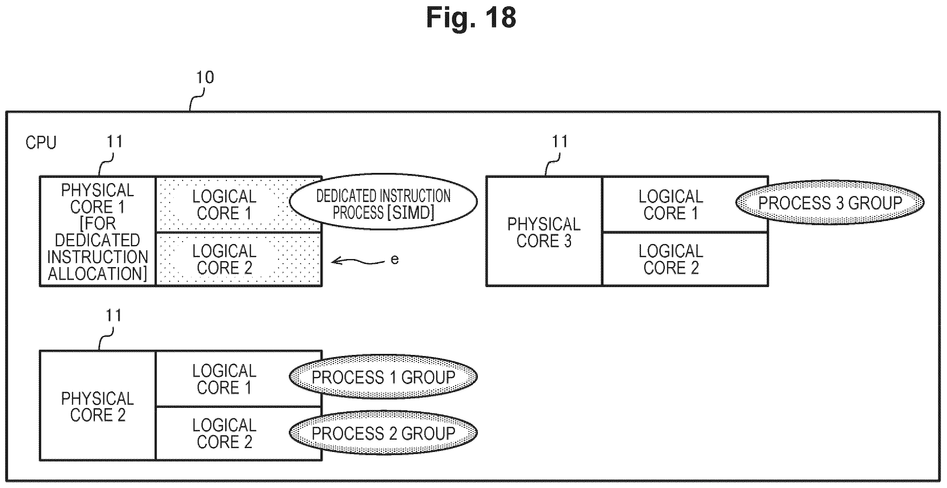

Fig. 18 is a diagram for describing Existing Technology 2. Fig. 18 is a diagram illustrating a core allocation status in a case where a CPU includes a plurality of physical cores and each of the plurality of physical cores operates like two logical cores.

As illustrated in Fig. 18, a CPU 10 includes three physical cores 11 (physical core 1, physical core 2, and physical core 3). Hyper-threading allows a single physical core 11 (physical core 1, physical core 2, and physical core 3) to operate like two logical cores (logical core 1 and logical core 2). Among these, the physical core 11 (physical core 1) is for dedicated instruction allocation. As described above, the dedicated instruction is a SIMD operation instruction or a dedicated instruction for encryption. The logical core 1 of the physical core 1 for dedicated instruction allocation is a core that executes a dedicated instruction process (SIMD). The logical core 2 of the physical core 1 for the dedicated instruction allocation is a core that executes the dedicated instruction, but is not allocated here. That is, only the process of executing the dedicated instruction is allocated to the logical core 1 and the logical core 2 of the physical core 1 for the dedicated instruction allocation.

In addition, the logical core 1 of the physical core 2 is a core that executes a process 1 group that is a normal instruction, and the logical core 2 is a core that executes a process 2 group that is a normal instruction. Similarly, the logical core 1 of the physical core 3 is a core that executes a process 3 group that is a normal instruction, and no process group is allocated to the logical core 2.

In Existing Technology 2, the cores of processes that execute dedicated instructions and other processes are dedicated separately. In the example of Fig. 18, in the physical core 1 for dedicated instruction allocation, an unused logical core 2 is generated (symbol e in Fig. 18), and the efficiency of the number of execution cores decreases. Since generation of unused logical cores 2 leads to an increase in the number of operating cores, there is a problem that "Requirement 2: minimization of the number of execution cores" is not satisfied.

The present invention has been made in view of such a background, and an object of the present invention is to improve a core utilization rate and reduce the number of CPU operation cores.

### Solution to Problem

In order to solve the above problem, there is provided a task scheduler device that allocates an execution process of a dedicated instruction specialized for a specific operation to a logical core using hardware multithreading that makes one physical core appear as a plurality of logical cores in a pseudo manner in a computing system that executes the dedicated instruction, the task scheduler device including: a dedicated instruction execution detection unit configured to detect execution of the dedicated instruction; a dedicated instruction execution affected core identification unit configured to identify the logical core which operates on the same physical core as an execution core of the dedicated instruction and whose operating frequency decreases due to the execution of the dedicated instruction; a low frequency allowable process allocation determination unit configured to make a determination to identify a process that satisfies a predetermined performance requirement even when operating at a low frequency with respect to the logical core whose operating frequency decreases, which has been identified by the dedicated instruction execution affected core identification unit; and a process core allocation unit configured to allocate the process identified by the low frequency allowable process allocation determination unit to the logical core whose operating frequency decreases.

### Advantageous Effects of Invention

According to the present invention, it is possible to improve the core utilization rate and reduce the number of CPU operation cores.

### Brief Description of Drawings

Fig. 1 is a schematic configuration diagram of a computing system including a task scheduler device according to an embodiment of the present invention.
Fig. 2 is an example of a configuration in which the task scheduler device of the computing system according to the embodiment of the present invention is arranged in a user space.
Fig. 3 is an example of a configuration in which the task scheduler device of the computing system according to the embodiment of the present invention is arranged in an OS.
Fig. 4 is a diagram illustrating an example in which a computing system according to the embodiment of the present invention is applied to the task scheduler device in a server virtualization environment having a general-purpose Linux kernel (registered trademark) and a VM configuration.
Fig. 5 is a diagram illustrating, in the form of a table, a structure of a management database held by a dedicated instruction execution detection unit of the task scheduler device of the computing system according to the embodiment of the present invention.
Fig. 6 is a diagram illustrating, in the form of a table, a structure of a database held by an in-operation process operating frequency performance influence determination unit of the task scheduler device of the computing system according to the embodiment of the present invention.
Fig. 7 is a diagram illustrating an operation pattern of the task scheduler device in a case where a core of a process in operation of the task scheduler device of the computing system according to the embodiment of the present invention is moved.
Fig. 8 is a flowchart illustrating an operation pattern of the task scheduler device in a case where a core of a process in operation of the task scheduler device of the computing system according to the embodiment of the present invention is moved.
Fig. 9 is a diagram illustrating an operation pattern of the task scheduler device in a case where a new startup process of the task scheduler device of the computing system according to the embodiment of the present invention is scheduled.
Fig. 10 is a flowchart illustrating an operation pattern of the task scheduler device in a case where a new startup process of the task scheduler device of the computing system according to the embodiment of the present invention is scheduled.
Fig. 11 is a diagram illustrating an operation pattern of a task scheduler device for collecting (periodically executing) information on frequency influence in each process of the task scheduler device of the computing system according to the embodiment of the present invention.
Fig. 12 is a flowchart illustrating an operation pattern of the task scheduler device for collecting (periodically executing) information on frequency influence in each process of the task scheduler device of the computing system according to the embodiment of the present invention.
Fig. 13 is a hardware configuration diagram illustrating an example of a computer that implements functions of the task scheduler device of the computing system according to the embodiment of the present invention.
Fig. 14 is a diagram illustrating a configuration of a CPU equipped with SIMD units that execute SIMD instructions.
Fig. 15 is a diagram illustrating executable instructions and operating frequencies of a logical core illustrated in Fig. 14.
Fig. 16 is a diagram illustrating a core allocation status in a case where a CPU includes a plurality of physical cores and each of the plurality of physical cores operates like two logical cores in Existing Technology 1.
Fig. 17 is a diagram illustrating a cumulative allocated CPU time of a process group allocated according to the core allocation status in a case where the CPU includes the plurality of physical cores and each of the plurality of physical cores operates like two logical cores in Existing Technology 1.
Fig. 18 is a diagram illustrating a core allocation status in a case where a CPU includes a plurality of physical cores and each of the plurality of physical cores operates like two logical cores in Existing Technology 2.

### Description of Embodiments

A task scheduler device and the like in a mode for carrying out the present invention (the mode is hereinafter referred to as "the present embodiment") is described below with reference to the drawings.

### [Overview]

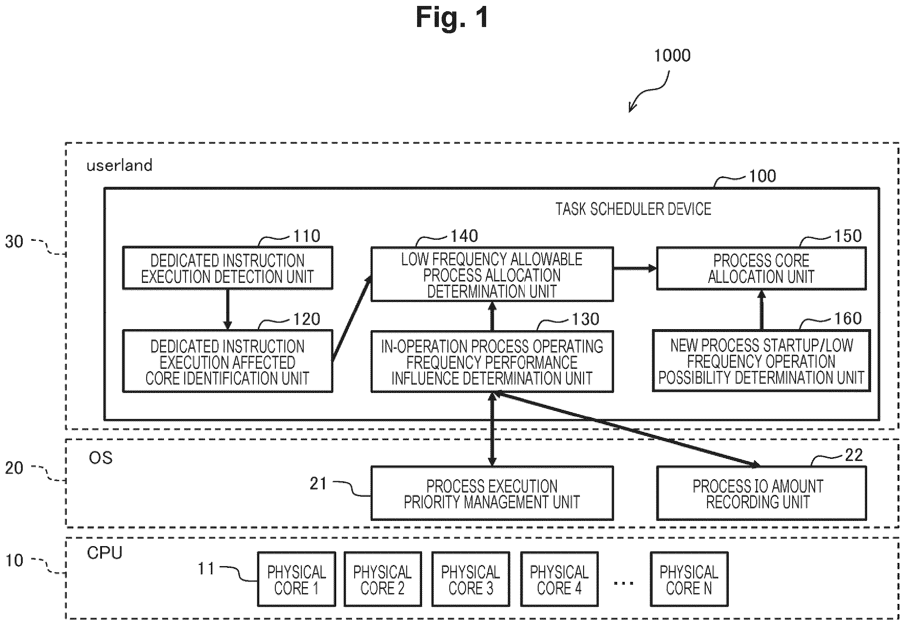

Fig. 1 is a schematic configuration diagram of a computing system including a task scheduler device according to an embodiment of the present invention.

The present embodiment is an example applied to a CPU as a computing system. In addition to the CPU, the present embodiment is similarly applicable to a processor such as a graphic processing unit (GPU), a field programmable gate array (FPGA), or an application specific integrated circuit (ASIC).

As illustrated in Fig. 1, a computing system 1000 includes a CPU 10 which is hardware (HW), physical cores 11 (physical core 1, physical core 2,..., and physical core N) (processors) on the CPU 10, an OS 20, a userland 30, and a task scheduler device 100 which is a server.

The computing system 1000 executes dedicated instructions that are specialized for particular operations, including SIMD instructions or dedicated instructions for encryption. The computing system 1000 includes a task scheduler device 100 that allocates an execution process of a dedicated instruction to a logical core using hardware multithreading that makes one physical core appear as a plurality of logical cores in a pseudo manner.

Configurations serving as premises of the computing system 1000 are as follows.

### · Server

The server (task scheduler device 100) is equipped with a CPU (processor). The CPU has one or more physical cores. The CPU supports a hardware multithreading technology, and can make a single physical core appear as a plurality of logical cores.

### · Process

There are the following three types of processes operating on the server (task scheduler device 100).
1. Execution Process of Dedicated Instruction
2. Process Suitable for Low Frequency Operation. This process has characteristics such as a large amount of input/output (I/O), a long CPU waiting time, and loose real-time requirements.
3. Process Not Suitable for Low Frequency Operation. This process has characteristics such as a large amount of arithmetic processing by the CPU and strict real-time requirements.

### · Scheduler

There are a plurality of types of processes operating on the server (task scheduler device 100), and characteristics such as a ratio of executing a dedicated instruction, a number of input/output processes, and a processing priority are different.

### <CPU 10>

The CPU 10 includes physical cores 11 (physical core 1, physical core 2,..., and physical core N). The physical cores 11 (physical core 1, physical core 2,..., and physical core N) are specifically CPU cores (CPU core #0, CPU core #1,...) (not illustrated). The physical cores 11 each includes a logical core 1 and a logical core 2 so that each physical cores 11 executes two threads by using hyper-threading that makes one physical core appear as two physical cores in a pseudo manner.

### <OS 20>

The OS 20 includes a process execution priority management unit 21 and a process IO amount recording unit 22.

The process execution priority management unit 21 acquires a list of processes operating on the server and respective execution priorities. Specifically, the process execution priority management unit 21 acquires the execution priority (for example, a nice value) of each process by using a nice command.

The process IO amount recording unit 22 acquires a list of processes operating on the server (the task scheduler device 100) and respective input/output amounts. Specifically, the process IO amount recording unit 22 acquires the IO amount (for example, IOStat) of each process by using an IOStat command.

### [Task Scheduler Device 100]

The task scheduler device 100 includes a dedicated instruction execution detection unit 110 (dedicated instruction detection unit), a dedicated instruction execution affected core identification unit 120 (core identification unit), an in-operation process operating frequency performance influence determination unit 130 (performance influence determination unit), a low frequency allowable process allocation determination unit 140 (allowable process determination unit), a process core allocation unit 150, and a new process startup/low frequency operation possibility determination unit 160.

### [Arrangement of Task Scheduler Device]

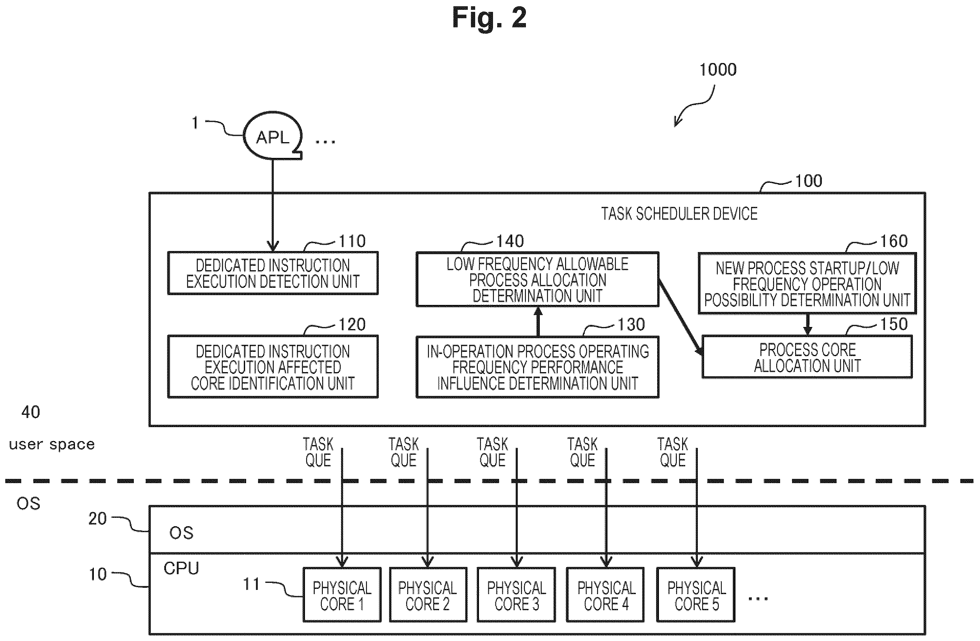

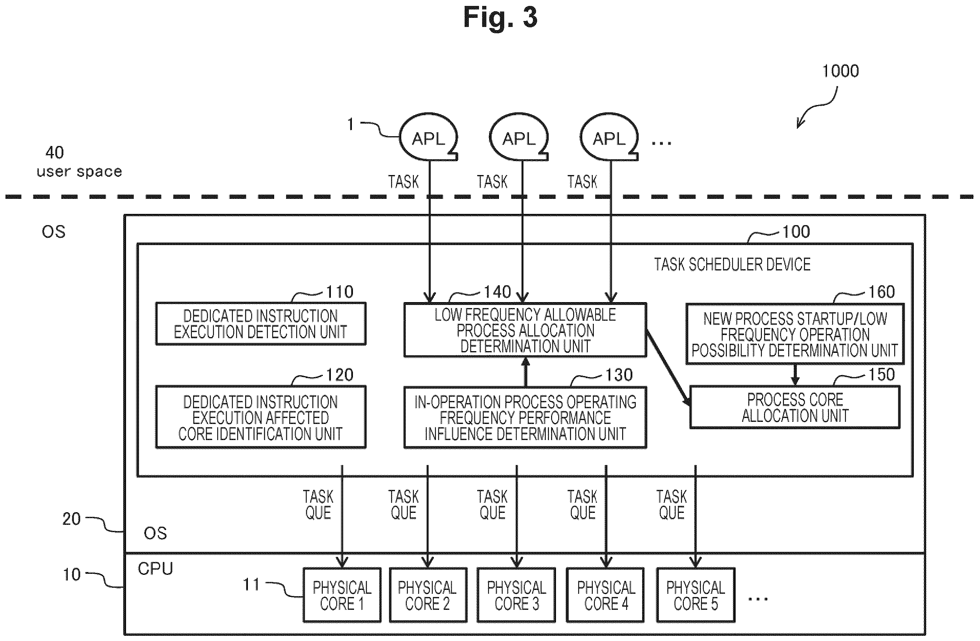

Figs. 2 and 3 are diagrams for describing the arrangement of the task scheduler device 100 of Fig. 1.

### · Arrangement of Task Scheduler Device in User Space

Fig. 2 is an example of a configuration in which the task scheduler device 100 of Fig. 1 is arranged in a user space.

In the computing system 1000 illustrated in Fig. 2, the task scheduler device 100 is arranged in a user space 40. The computing system 1000 executes an application (APL) 1 arranged in the user space 40. The computing system 1000 executes the APL 1 on a server including an OS.

The present invention can be applied to a case where there is a thread in the user space 40, such as Intel Data Plane Development Kit (DPDK) (registered trademark).

### · Arrangement of Task Scheduler Device in OS

Fig. 3 is an example of a configuration in which the task scheduler device 100 of Fig. 1 is arranged in the OS 20.

In the computing system 1000 illustrated in Fig. 3, the task scheduler device 100 is arranged in the OS 20. The computing system 1000 executes the APL 1 on a server including the OS 20.

The present invention can be applied to a case where there is a thread inside the kernel, such as New API (NAPI) (registered trademark).

### [Variations in VM Configuration of Task Scheduler Device]

As described above with reference to Fig. 2, the present invention can be applied to the example of the configuration in which the task scheduler device 100 is arranged in the user space 40. In this case, the OS is not limited. Also, the environment is not limited to a server virtualization environment.

### <Example of Application to VM Configuration>

Against the background of advances in virtualization technology achieved through network functions virtualization (NFV), systems are being constructed and operated for each of services. Also, a mode called service function chaining (SFC) is becoming mainstream, in which, based on the above-described mode of constructing a system for each service, service functions are divided into units of reusable modules and are operated on independent virtual machine (VM: virtual machine, container, etc.) environments, and thereby the service functions are used as needed in the manner of components, and operability is improved.

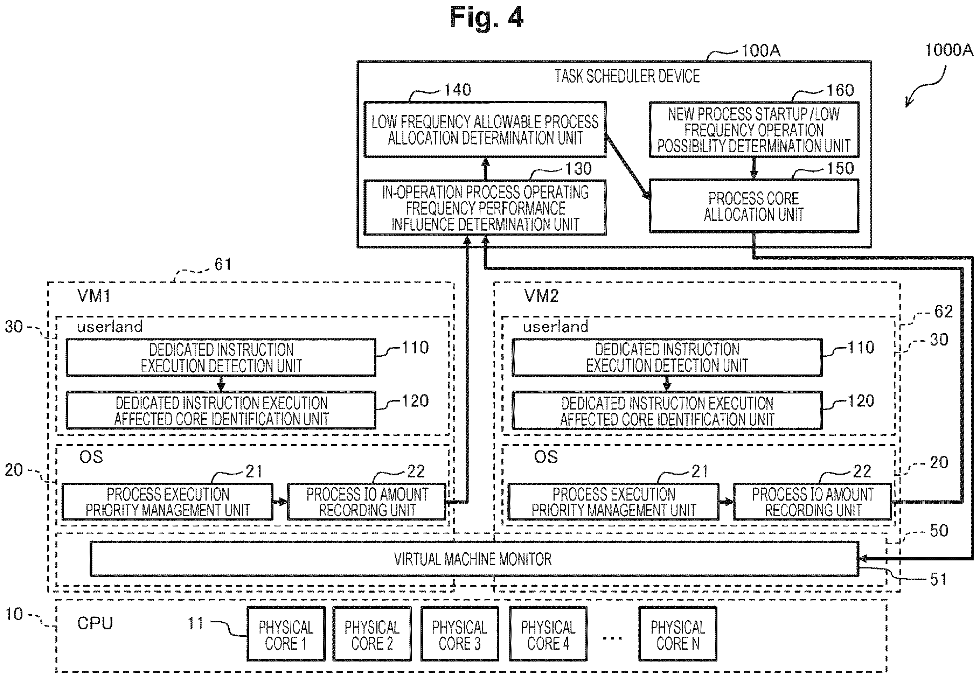

Fig. 4 is a diagram illustrating an example in which a computing system 1000A is applied to a task scheduler device in a server virtualization environment having a general-purpose Linux kernel (registered trademark) and a VM configuration. The same components as those in Fig. 1 are denoted by the same reference numerals.

The computing system 1000A includes a CPU 10, physical cores 11 (physical core 1, physical core 2,..., and physical core N) (processors) on the CPU 10, a VM 50, a virtual machine monitor (VMM) 51 on the VM 50, an OS 20, a userland 30, and a task scheduler device 100A.

The virtual machine monitor (VMM) 51 virtualizes a computer and allows a plurality of different OSs to operate in parallel without interfering with each other. The virtual machine monitor (VMM) 51 creates a virtual machine (VM) that behaves like a physical computer to software, and can run various types of OSs thereon.

In each of the plurality of VMs (VM1 and VM2), the OS 20 includes a process execution priority management unit 21 and a process IO amount recording unit 22, and the userland 30 includes a dedicated instruction execution detection unit 110 and a dedicated instruction execution affected core identification unit 120.

The task scheduler device 100A includes an in-operation process operating frequency performance influence determination unit 130, a low frequency allowable process allocation determination unit 140, a process core allocation unit 150, and a new process startup/low frequency operation possibility determination unit 160. The task scheduler device 100A is not arranged in the userland 30 of a single OS 20, but is arranged separately outside, and operates as a so-called controller functional unit.

In the VM configuration, the task scheduler device 100A performs core allocation from information about a process across a plurality of VMs.

### [Configuration of Each Functional Unit of Task Scheduler Device]

### <Dedicated Instruction Execution Detection Unit 110>

The dedicated instruction execution detection unit 110 detects (determines) whether or not the dedicated instruction has been executed in the currently executed process. Specifically, the dedicated instruction execution detection unit 110 receives an identifier (PID: Process IDentifier or the like) of a target process for determining whether or not to execute the dedicated instruction, and outputs whether or not the corresponding process executes the dedicated instruction.

Methods for determining whether or not a dedicated instruction has been executed in a currently executed process include the following two forms.

### 1: Static Detection Method

The dedicated instruction execution detection unit 110 determines whether or not a process uses a dedicated instruction on the basis of information such as a process name.

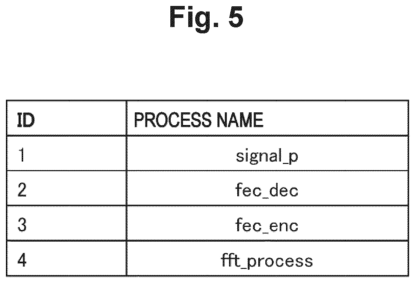

Fig. 5 is a diagram illustrating, in the form of a table, a structure of a management database held by the dedicated instruction execution detection unit 110. Fig. 5 is an example of a management database of a process of executing a dedicated instruction.

As illustrated in Fig. 5, a process name (signal_p, fec_dec, fec_enc, and fft_process) is registered for each ID. Each of the process names (signal_p, fec_dec, fec_enc, and fft_process) is a process of executing a dedicated instruction.

The dedicated instruction execution detection unit 110 compares a process list (Fig. 5) using a dedicated instruction, which is registered in advance, with a process name being executed, and determines whether or not the dedicated instruction has been executed.

### 2: Dynamic Detection Method

A special register held by the CPU (for example, in an x86 processor, an XCR0 register indicating a changed data area of SIMD) is used to determine whether or not a dedicated instruction has been executed. In this case, when the execution of the process to be detected is switched, the OS kernel scheduler checks for changes in the value of this register.

The special registers held by the CPU are described in "Chapter 13, Managing State Using The Xsave Feature Set" (PDF), Intel(R) 64 and IA-32 Architectures Software Developer's Manual, Volume 1: Basic Architecture, Intel Corporation (2019), Retrieved 23 March 2019.

### <Dedicated Instruction Execution Affected Core Identification Unit 120>

The dedicated instruction execution affected core identification unit 120 identifies a logical core which operates on the same physical core as an execution core of the dedicated instruction and whose operating frequency decreases due to the execution of the dedicated instruction. In the present embodiment, the dedicated instruction execution affected core identification unit 120 identifies a core that is executing the input process ID and a core that is affected by the process ID. Specifically, the dedicated instruction execution affected core identification unit 120 receives the number of a process that is executing the dedicated instruction and outputs the number of a CPU core that is affected by the dedicated instruction.

For example, by using a pidstat command in Linux, a core on which the process operates is identified from the process ID (PID). As reference literature for the pidstat command, there is pidstat (1) Linux manual page, [online], [retrieved on September 6, 2022], Internet <URL: https://man7.org/linux/man-pages/man1/pidstat.1.html>.

The dedicated instruction execution affected core identification unit 120 extracts the number of operating core information from the command output, identifies a CPU core number operating on the same physical core as the corresponding core as CPU core information (for example, cpuinfo for Linux), and outputs the identified CPU core number.

### <In-operation Process Operating Frequency Performance Influence Determination Unit 130>

The in-operation process operating frequency performance influence determination unit 130 determines the performance influence of the operating frequency of a process in operation.

In the present embodiment, the in-operation process operating frequency performance influence determination unit 130 determines the performance influence of the operating frequency for all processes operating in the server (the task scheduler device 100). Specifically, the in-operation process operating frequency performance influence determination unit 130 is started in response to a regular interval (for example, 10 seconds) or a new startup/end of a process, and determines the performance influence of the CPU operating frequency on each process.

Methods for determining a performance influence of an operating frequency of a process in operation include the following two methods.

### 1: Static Method

The static method is a method for determining the influence of the operating frequency on the basis of information such as a process name.

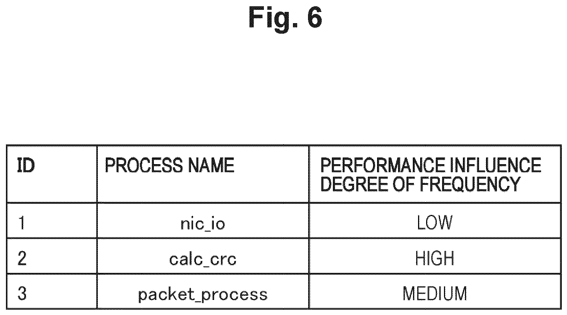

Fig. 6 is a diagram illustrating, in the form of a table, a structure of a database held by the in-operation process operating frequency performance influence determination unit 130. Fig. 6 is an example of a database of a process for determining the frequency influence of a process.

As illustrated in Fig. 6, a process name (nic_io, calc_crc, and packet_process) and a performance influence degree of the frequency are registered for each ID. Each of the process names (nic_io, calc_crc, and packet_process) is a process for determining the frequency influence of a process.

The in-operation process operating frequency performance influence determination unit 130 compares a process list (list of IDs of processes) (Fig. 6) operating on the server (task scheduler device 100), which is registered in advance, with a process name being executed, and determines an in-operation process operating frequency performance influence.

### 2: Dynamic Method

The dynamic method is a method for determining the influence of the frequency change of each process on the basis of the result of the execution priority (for example, a nice value) of each process of the process execution priority management unit 21 and the IO amount (for example, iostat) of the process IO amount recording unit 22.

The in-operation process operating frequency performance influence determination unit 130 acquires the execution priority (nice value) and the IO amount (iostat) of each process from the process execution priority management unit 21 and the process IO amount recording unit 22, integrates these two values to obtain an influence degree, and determines a performance influence of an operating frequency of a process in operation on the basis of the influence degree.

Hereinafter, a specific example of influence degree calculation is described.

The in-operation process operating frequency performance influence determination unit 130 acquires the priority N (for example, -20 to 20) of each process from the process execution priority management unit 21, and acquires the IO amount (X Mbytes/s) from the process IO amount recording unit 22. The IO amount is divided by a predetermined value (for example, "5") to obtain M (0 to 20) (where it is assumed that 21 or more is 20). These two values are summed (K = N - M) to determine the influence degree.

### <Low Frequency Allowable Process Allocation Determination Unit 140>

The low frequency allowable process allocation determination unit 140 makes a determination to identify a process that satisfies a predetermined performance requirement even when operating at a low frequency with respect to the logical core whose operating frequency decreases, which has been identified by the dedicated instruction execution affected core identification unit 120.

For example, the low frequency allowable process allocation determination unit 140 selects, as a pair, a process that is less affected even when operating at a low frequency and a core that is affected by the dedicated instruction on the basis of information on the number of the core affected by the dedicated instruction and information on a performance influence of the operating frequency of each process.

Specifically, the low frequency allowable process allocation determination unit 140 selects a process that may be operated at a low frequency from the input list of IDs of processes, selects a CPU core that is affected by the dedicated instruction, and outputs them as a pair. The logic for selecting the process ID at this time is to select the one with the highest allowable degree for operating at a low frequency.

### (Input/Output of Low Frequency Allowable Process Allocation Determination Unit 140)

The Input/output of the low frequency allowable process allocation determination unit 140 is described. First, the input of the low frequency allowable process allocation determination unit 140 is as follows.
Input 1: The number of a CPU core affected by a dedicated instruction is input from the dedicated instruction execution affected core identification unit 120.
Input 2: The list of IDs of processes operating on the corresponding server and the influence of each operating frequency are input from the in-operation process operating frequency performance influence determination unit 130.

Next, the output of the low frequency allowable process allocation determination unit 140 is as follows.
Output: A pair of a process ID capable of operating at a low frequency and an ID of a core affected by a dedicated instruction is output.

### (Operation of Low Frequency Allowable Process Allocation Determination Unit 140)

The operation of the low frequency allowable process allocation determination unit 140 is described as follows.

It is assumed that the CPU 10 illustrated in Fig. 1 includes ten cores of the physical core 11 (No. 1 to No. 10) and six processes (A, B, C, D, E, and F) that are operating. In this situation, the low frequency allowable process allocation determination unit 140 makes the following determination.

The low frequency allowable process allocation determination unit 140 receives the following two inputs 1 and 2.
Input 1: "Information on numbers of cores affected by dedicated instruction"
   => Affected (frequency degradation): No. 1, No. 2, No. 3, No. 4, No. 5, No. 6
   => Not affected: No. 7, No. 8, No. 9, No. 10
Input 2: "List of IDs of processes operating on the server and respective characteristics (magnitude of influence from operating frequency)"
   => Affected (performance degradation): A, B, C, D
   => Not affected: E, F

The low frequency allowable process allocation determination unit 140 selects the processes E and F as "processes that may be operated at a low frequency" from the list of IDs of processes.

As cores for operating these processes, "No. 1" and "No. 2" are selected from "No. 1, No. 2, No. 3, No. 4, No. 5, and No. 6".

Finally, two pairs (core No. 1 and process E) and (core No. 2 and process F) are output.

### <Process Core Allocation Unit 150>

The process core allocation unit 150 allocates the process identified by the low frequency allowable process allocation determination unit 140 to a logical core whose operating frequency decreases. For example, the process core allocation unit 150 performs core allocation to a process of operating a process having the input process ID on the input CPU core. Incidentally, for cores affected by the input performance, their information is held in a list of cores (not illustrated).

The process core allocation unit 150 performs the following input and output processing.
Input (when core allocation of existing process should be changed): Pair of process ID and CPU core ID
Input (when process is newly started): Command name
Output: None

A core allocation method by the process core allocation unit 150 to the process is described as follows.

### Pattern 1: OS scheduler method

Method 1: As illustrated in Figs. 2 and 3, the OS scheduler method modifies the task scheduler of the OS kernel to perform scheduling on a specific CPU core.

Method 2: A method for changing the scheduling to the specific CPU core by a method for changing the CPU allocation of the operating task. The example method is such as the sched_setaffinity() function, [online], [retrieved on September 6, 2022], Internet <URL: https://linuxjm.osdn.jp/html/LDP_man-pages/man2/sched_setaffinity.2.html>.

### Pattern 2: Implementation method by task scheduler in application

As illustrated in Figs. 2 and 3, the implementation method by the task scheduler in the application is a mode in which the task scheduler allocates a CPU core in a case where the application has its own task scheduler. Specifically, a corresponding process and CPU core are designated using a mechanism for dynamically designating a CPU core to which a task is scheduled, such as pthread_setaffinity function(), [online], [retrieved on September 6, 2022], Internet <URL: https://linuxjm.osdn.jp/html/LDP_man-pages/man3/pthread_setaffinity_np.3.html>.

### Pattern 3: Application method when process is newly started

When a certain process is started, the process is operated on a specific core by using a method for designating a CPU core on which the process is to be operated such as a taskset, [online], [retrieved on September 6, 2022], Internet <URL: https://www.man7.org/linux/man-pages/man1/taskset.1.html> command.

In the operation example of the low frequency allowable process allocation determination unit 140 described above, a description is given of a case where the low frequency allowable process allocation determination unit 140 outputs two pairs (core No. 1 and process E) and (core No. 2 and process F) to the process core allocation unit 150 .

The process core allocation unit 150 receives two pairs (core No. 1 and process E) and (core No. 2 and process F) from the low frequency allowable process allocation determination unit 140, and performs setting so that process E operates on core No. 1 and process F operates on core No. 2.

### <New Process Startup/Low Frequency Operation Possibility Determination Unit 160>

The new process startup/low frequency operation possibility determination unit 160 receives input and output both with command names.

The new process startup/low frequency operation possibility determination unit 160 determines whether or not the input command can perform the low frequency operation, and outputs a command name to the process core allocation unit 150 in order to operate the CPU core affected by the dedicated instruction in a case where the input command is applicable. Specifically, the new process startup/low frequency operation possibility determination unit 160 collates the input command name with a command name in an internal database and determines whether or not the operation can be performed at a low frequency. In a case where the new process startup/low frequency operation possibility determination unit 160 determines that the operation can be performed at a low frequency through the determination, it outputs a command name to the process core allocation unit 150.

Hereinbelow, the operation of the computing system 1000 configured as described above is described.

### [Operation of Task Scheduler Device]

The operation of the task scheduler device in a case where a core of a process in operation is moved is described. In the following description of the operation, the physical core is referred to as a CPU core.

### <In Case Where Core of Process in Operation is Moved>

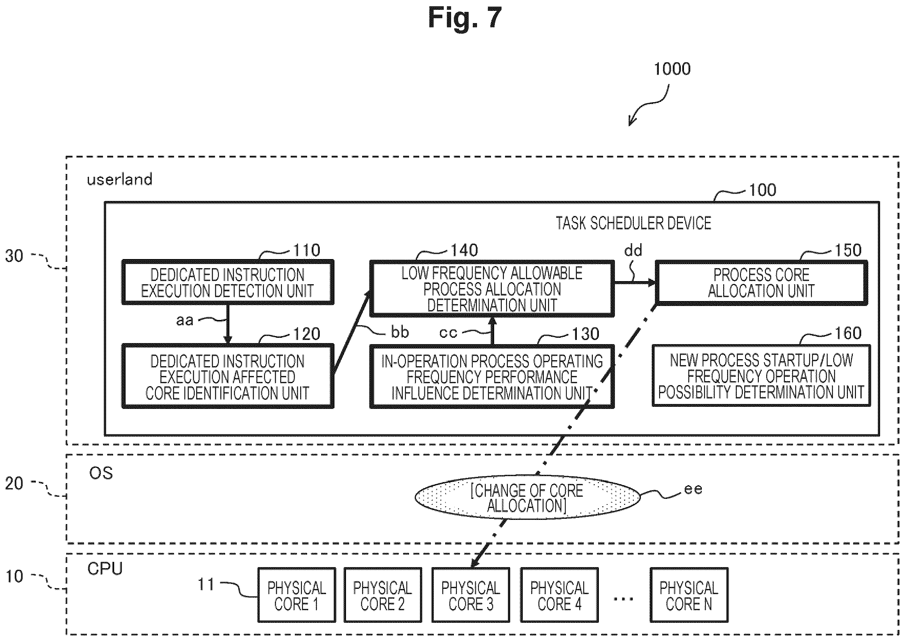

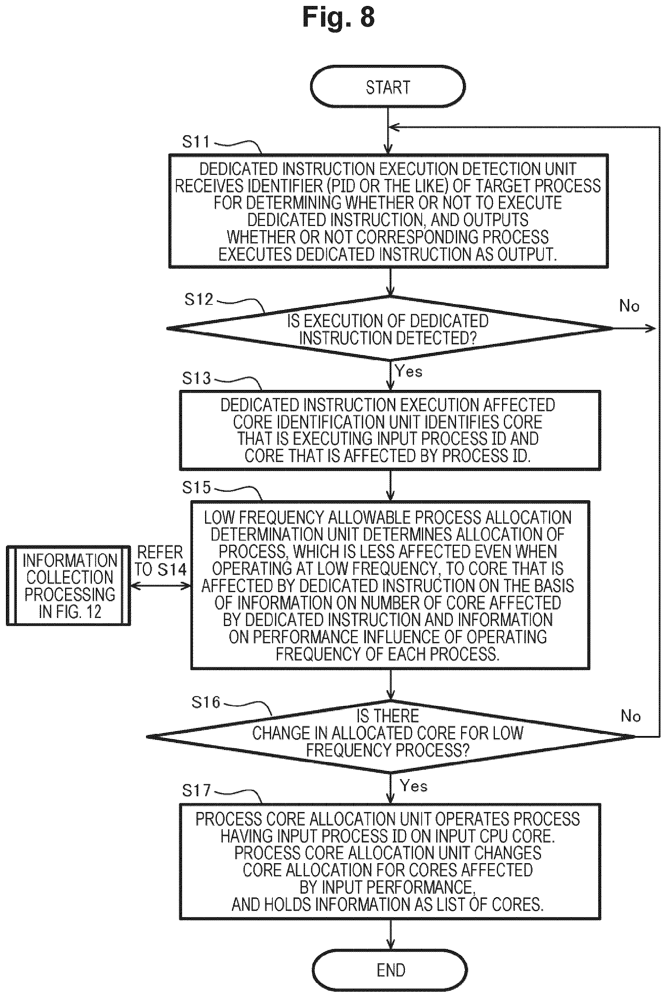

Fig. 7 is a diagram illustrating an operation pattern of the task scheduler device in a case where a core of a process in operation is moved, and Fig. 8 is a flowchart thereof. In Fig. 7, functional units of corresponding operations are indicated by thick blocks.

In step S11, the dedicated instruction execution detection unit 110 receives an identifier (PID or the like) of a target process for determining whether or not the target process executes the dedicated instruction, and outputs whether or not the corresponding process executes the dedicated instruction.

In step S12, the dedicated instruction execution detection unit 110 determines whether or not the execution of the dedicated instruction is detected. In a case where the execution of the dedicated instruction is not detected (S12: No), the process returns to step S11.

In a case where the execution of the dedicated instruction is detected (S12: Yes) (symbol aa in Fig. 7), in step S13, the dedicated instruction execution affected core identification unit 120 identifies a core that is executing the input process ID and a core that is affected by the process ID. Specifically, the dedicated instruction execution affected core identification unit 120 receives a number of a process that is executing the dedicated instruction and outputs the number of a CPU core that is affected by the dedicated instruction (symbol bb in Fig. 7).

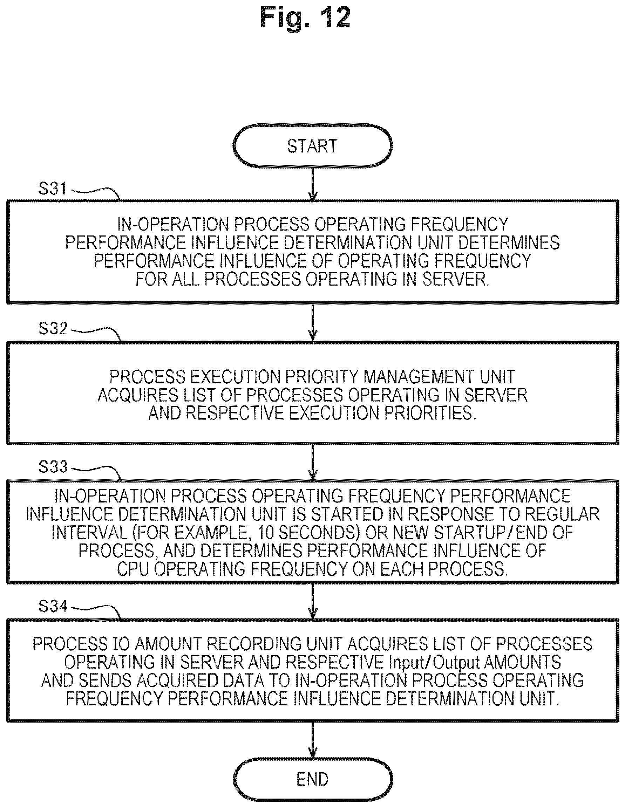

In step S14, the low frequency allowable process allocation determination unit 140 refers to the information collection processing in Fig. 12 being executed by the in-operation process operating frequency performance influence determination unit 130, and receives the determination result of the performance influence of the operating frequency of the process in operation from the in-operation process operating frequency performance influence determination unit 130 (symbol cc in Fig. 7).

In step S15, the low frequency allowable process allocation determination unit 140 determines allocation of a process, which is less affected even when operating at a low frequency, to a core that is affected by the dedicated instruction on the basis of information on the number of the core affected by the dedicated instruction and information on a performance influence of the operating frequency of each process.

In step S16, the low frequency allowable process allocation determination unit 140 determines whether or not there is a change in the allocated core for the low frequency process. In a case where there is no change in the allocated core for the low frequency process (S16: No), the process returns to step S11.

In a case where there is a change in the allocated core for the low frequency process (S16: Yes) (symbol dd in Fig. 7), in step S17, the process core allocation unit 150 operates the process having the input process ID on the input CPU core. The process core allocation unit 150 changes the core allocation for cores affected by the input performance (symbol ee in Fig. 7), holds information as a list of cores (not illustrated), and ends the processing of this flow.

### <In Case of Scheduling New Startup Process>

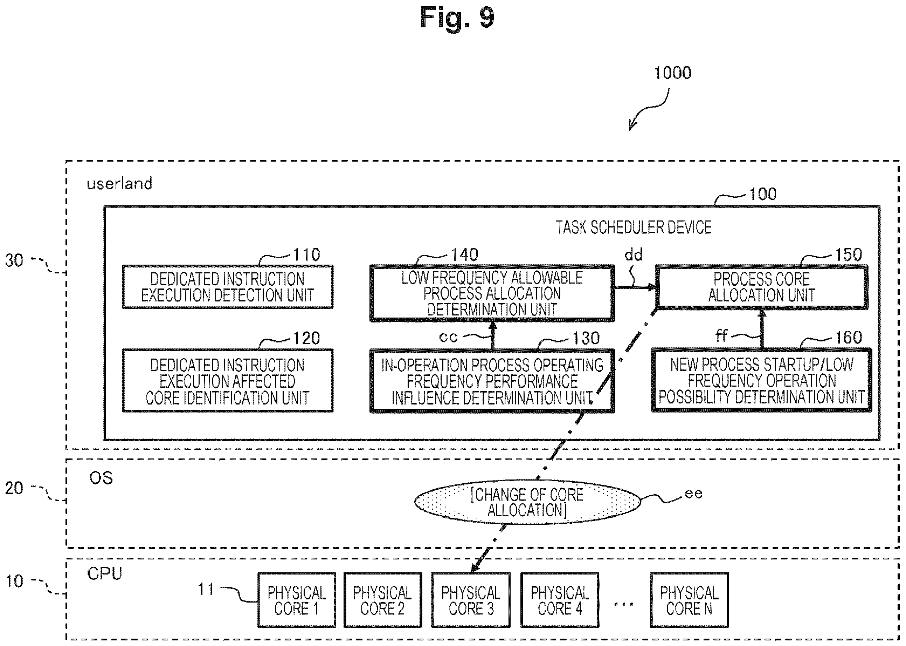

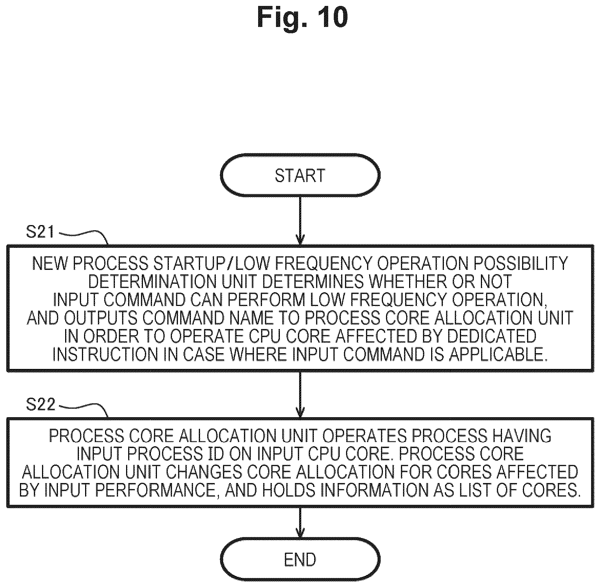

Fig. 9 is a diagram illustrating an operation pattern of the task scheduler device in a case where a new startup process is scheduled, and Fig. 10 is a flowchart thereof. In Fig. 9, functional units of corresponding operations are indicated by thick blocks.

In step S21, the new process startup/low frequency operation possibility determination unit 160 determines whether or not the input command can perform the low frequency operation, and outputs a command name to the process core allocation unit 150 in order to operate the CPU core affected by the dedicated instruction in a case where the input command is applicable (symbol ff in Fig. 9).

In step S22, the process core allocation unit 150 causes a process having the input process ID to operate on the input CPU core. The process core allocation unit 150 changes the core allocation for cores affected by the input performance (symbol ee in Fig. 9), holds their information in a list of cores, and ends the processing of this flow.

### <Collection of Information on Frequency Influence of Each Process (Executed Periodically)>

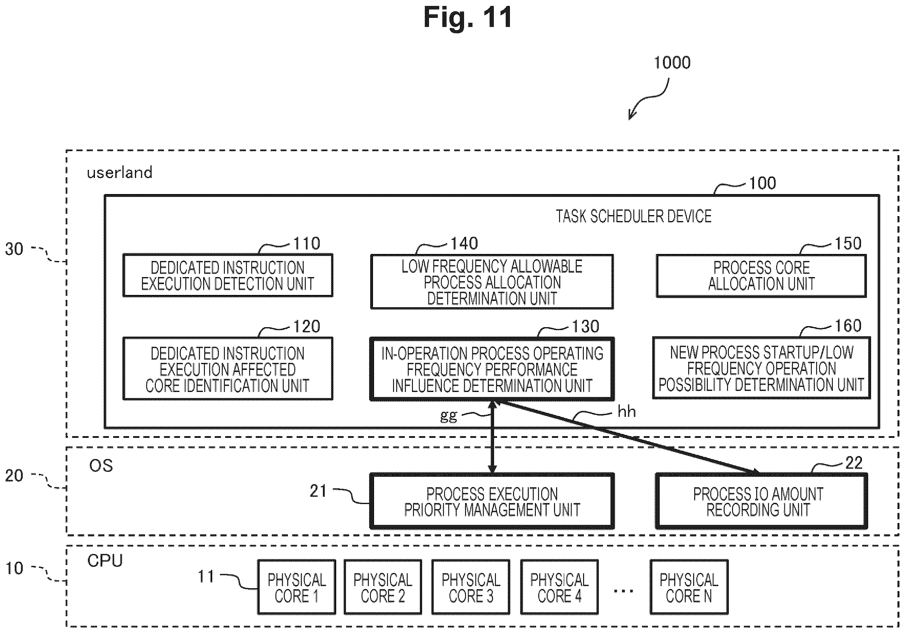

Fig. 11 is a diagram illustrating an operation pattern of the task scheduler device for collecting information on the frequency influence (executed periodically) of each process, and Fig. 12 is a flowchart thereof. In Fig. 11, functional units of corresponding operations are indicated by thick blocks.

In step S31, the in-operation process operating frequency performance influence determination unit 130 determines the performance influence of the operating frequency for all processes operating in the server (the task scheduler device 100). Specifically, the in-operation process operating frequency performance influence determination unit 130 is started in response to a regular interval (for example, 10 seconds) or a new startup/end of a process, and determines the performance influence of the CPU operating frequency on each process.

In step S32, the process execution priority management unit 21 acquires a list of IDs of processes operating in the server (the task scheduler device 100) and the respective execution priorities on the basis of an instruction from the in-operation process operating frequency performance influence determination unit 130, and sends the acquired data to the in-operation process operating frequency performance influence determination unit 130 (symbol gg in Fig. 11). Specifically, the process execution priority management unit 21 acquires the execution priority of each process by using the nice command.

In step S33, the in-operation process operating frequency performance influence determination unit 130 is started in response to a regular interval (for example, 10 seconds) or a new startup/end of a process, and determines the performance influence of the CPU operating frequency on each process.

In step S34, the process IO amount recording unit 22 acquires a list of processes operating in the server (the task scheduler device 100) and the respective input/output amounts on the basis of an instruction from the in-operation process operating frequency performance influence determination unit 130, and sends the acquired data to the in-operation process operating frequency performance influence determination unit 130 (symbol hh in Fig. 11). Specifically, the process IO amount recording unit 22 acquires the IO amount of each process by using the iostat command and ends the processing of this flow.

### [Hardware Configuration]

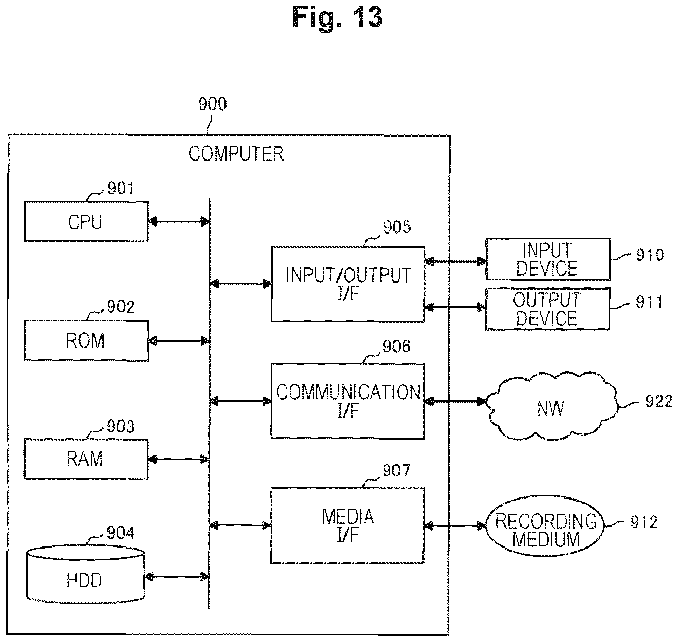

The task scheduler device 100 or 100A (Figs. 1 to 4) according to the above embodiment is implemented by a computer 900 having a configuration as illustrated in Fig. 13, for example.

Fig. 13 is a hardware configuration diagram illustrating an example of the computer 900 that implements the functions of the task scheduler device 100 or 100A (Figs. 1 to 4).

The computer 900 includes a CPU 901, a ROM 902, a RAM 903, an HDD 904, a communication interface (I/F) 906, an input/output interface (I/F) 905, and a media interface (I/F) 907.

The CPU 901 operates on the basis of a program stored in the ROM 902 or the HDD 904, and controls each unit of the task scheduler device 100 or 100A (Figs. 1 to 4). The ROM 902 stores a boot program to be executed by the CPU 901 when the computer 900 is activated, a program depending on the hardware of the computer 900, and the like.

The CPU 901 controls, via the input/output I/F 905, an input device 910 such as a mouse or a keyboard, and an output device 911 such as a display. Via the input/output I/F 905, the CPU 901 acquires data from the input device 910, and outputs generated data to the output device 911. Note that a graphics processing unit (GPU) or the like may be used as a processor in conjunction with the CPU 901.

The HDD 904 stores a program to be executed by the CPU 901, data to be used by the program, and the like. The communication I/F 906 receives data from another device via a communication network (for example, a network (NW) 920), outputs the data to the CPU 901, and transmits data generated by the CPU 901 to another device via the communication network.

The media I/F 907 reads a program or data stored in a recording medium 912, and outputs the program or data to the CPU 901 via the RAM 903. The CPU 901 loads a program related to target processing from the recording medium 912 into the RAM 903 via the media I/F 907, and executes the loaded program. The recording medium 912 is an optical recording medium such as a digital versatile disc (DVD) or a phase change rewritable disk (PD), a magneto optical recording medium such as a magneto optical disk (MO), a magnetic recording medium, a conductor memory tape medium, a semiconductor memory, or the like.

For example, in a case where the computer 900 functions as the task scheduler device 100 or 100A (Figs. 1 to 4) configured as one device according to the present embodiment, the CPU 901 of the computer 900 implements the functions of the task scheduler device 100 or 100A by executing a program loaded on the RAM 903. In addition, the HDD 904 stores data in the RAM 903. The CPU 901 reads a program related to target processing from the recording medium 912, and executes the program. Additionally, the CPU 901 may read a program related to target processing from another device via the communication network (NW 920).

### [Effects]

As described above, there is provided the task scheduler device 100 or 100A (Figs. 1 to 4) that allocates an execution process of a dedicated instruction specialized for a specific operation to a logical core using hardware multithreading that makes one physical core appear as a plurality of logical cores in a pseudo manner in the computing system 1000 or 1000A (Figs. 1 to 4) that executes the dedicated instruction, the task scheduler device including: the dedicated instruction execution detection unit 110 (dedicated instruction detection unit) configured to detect execution of the dedicated instruction; the dedicated instruction execution affected core identification unit 120 (core identification unit) configured to identify the logical core which operates on the same physical core as an execution core of the dedicated instruction and whose operating frequency decreases due to the execution of the dedicated instruction; the low frequency allowable process allocation determination unit 140 (allowable process determination unit) configured to make a determination to identify a process that satisfies a predetermined performance requirement even when operating at a low frequency with respect to the logical core whose operating frequency decreases, which has been identified by the dedicated instruction execution affected core identification unit 120; and the process core allocation unit 150 configured to allocate the process identified by the low frequency allowable process allocation determination unit 140 to the logical core whose operating frequency decreases.

In this way, the task scheduler device 100 or 100A can reduce the number of execution physical cores while allocating the CPU time necessary for each process to a process group including an execution process of a dedicated instruction specialized for a specific operation including, for example, a SIMD instruction or a dedicated instruction for encryption. Then, the power consumption can be reduced by reducing the number of execution physical cores.

That is, a core whose operating frequency decreases is identified, and a process that satisfies a predetermined performance requirement even when operating at a low frequency with respect to the identified logical core whose operating frequency decreases (a process that is less affected even when operating at a low frequency) is scheduled on the same physical core as a core that is executing, for example the SIMD, thereby increasing the utilization rate of the core. Accordingly, the core utilization rate can be improved, the number of CPU in-operation cores can be reduced, and the power consumption can be reduced. In particular, since the vRAN (vDU) fully uses the SIMD operation, there is a high likelihood that an increase in core efficiency may cause a problem. However, this task scheduler device 100A (Fig. 4) can achieve both improvement in the core utilization rate in the vRAN and reduction in the number of CPU in-operation cores.

The requirements to be achieved are summarized as follows.
· Requirement 1: CPU processing time required by each process is allocated (performance improvement effect)
· Requirement 2: Reduction in the number of execution cores (minimizing the number of execution cores required to execute each process) (power saving effect)

The above requirements 1 and 2 can be achieved.

In the task scheduler device 100 or 100A (Figs. 1 to 4), the dedicated instruction execution detection unit 110 stores a process list using a dedicated instruction, which is registered in advance, compares the process list with a process name being executed, and detects whether or not the dedicated instruction has been executed.

In this way, the task scheduler device 100 or 100A can improve the core utilization rate, reduce the number of CPU operation cores, and reduce power consumption.

In the task scheduler device 100 or 100A (Figs. 1 to 4), the low frequency allowable process allocation determination unit 140 selects, as a pair, a process that may be operated at a low frequency and a core that is affected by the dedicated instruction on the basis of information on the number of the core affected by the dedicated instruction and information on a performance influence of the operating frequency of each process.

In this way, the task scheduler device 100 or 100A selects a process that may be operated at a low frequency and a CPU core that is affected by the dedicated instruction, and outputs them as a pair, so that it is possible to select various combinations such as selecting a process with the highest allowable degree of operation at a low frequency. In addition, the task scheduler device 100 or 100A enables selection of a priority order according to an allowable degree.

The task scheduler device 100 or 100A (Figs. 1 to 4) includes the in-operation process operating frequency performance influence determination unit 130 (performance influence determination unit) configured to determine a performance influence of an operating frequency of a process in operation, and the in-operation process operating frequency performance influence determination unit 130 compares a process list (list of IDs of processes), which is registered in advance, with a process name being executed, and determines the performance influence of the operating frequency of the process in operation.

As described above, the task scheduler device 100 or 100A can determine the performance influence of the operating frequency by a static method for determining the influence of the operating frequency on the basis of the information such as the process name. Since the static method is a comparison determination between a process list registered in advance and a process name being executed, the amount of operation is small and the determination can be made quickly.

The task scheduler device 100 or 100A (Figs. 1 to 4) includes the in-operation process operating frequency performance influence determination unit 130 (performance influence determination unit) configured to determine a performance influence of an operating frequency of a process in operation, and the in-operation process operating frequency performance influence determination unit 130 acquires an execution priority and a process input/output amount of each process, integrates the execution priority and the process input/output amount to obtain an influence degree, and determines the performance influence of the operating frequency of the process in operation on the basis of the influence degree.

In this way, the task scheduler device 100 or 100A can determine the performance influence of the operating frequency by a dynamic method for determining the performance influence of the operating frequency of the process in operation. The dynamic method by operation can dynamically determine the performance influence of the operating frequency. Even in cases where a static method cannot fully address the problem, the performance influence of the operating frequency can be adaptively determined.

In addition, there is provided the computing system 1000 or 1000A (Figs. 1 to 4) that executes a dedicated instruction specialized for a specific operation, the computing system including the task scheduler device 100 or 100A (Figs. 1 to 4) that allocates an execution process of a dedicated instruction to a logical core using hardware multithreading that makes one physical core appear as a plurality of logical cores in a pseudo manner, in which the task scheduler device 100 or 100A (Figs. 1 to 4) includes: the dedicated instruction execution detection unit 110 configured to detect execution of the dedicated instruction; the dedicated instruction execution affected core identification unit 120 configured to identify the logical core which operates on the same physical core as an execution core of the dedicated instruction and whose operating frequency decreases due to the execution of the dedicated instruction; the low frequency allowable process allocation determination unit 140 configured to make a determination to identify a process that satisfies a predetermined performance requirement even when operating at a low frequency with respect to the logical core whose operating frequency decreases, which has been identified by the dedicated instruction execution affected core identification unit 120; and the process core allocation unit 150 configured to allocate the process identified by the low frequency allowable process allocation determination unit 140 to the logical core whose operating frequency decreases.

The computing systems 1000 and 1000A (Figs. 1 to 4) are computer systems in which a CPU (processor) on a server supports general-purpose instructions and dedicated instructions specialized for specific operations (SIMD operation instructions or dedicated instructions for encryption).

The above processor can be similarly applied to a processor such as GPU/FPGA/ASIC in a case where the processor has a SIMD operation execution core identifying function in addition to the CPU.

Note that the dedicated instruction may be any instruction as long as it is an instruction specialized for a specific operation. In the present embodiment, as an example, a SIMD instruction or a dedicated instruction for encryption is used, but SIMD/encryption is merely an example, and can be similarly applied to a dedicated instruction other than SIMD/encryption.

Note that, among processing operations described in the above embodiment, all or some of processing operations described as being automatically performed can be manually performed, or all or some of processing operations described as being manually performed can be automatically performed by a known method. In addition, processing procedures, control procedures, specific name, and information including various types of data and parameters illustrated in the specification and the drawings described above can be arbitrarily changed unless otherwise specified.

In addition, each component of each device that has been illustrated is functionally conceptual, and is not necessarily physically configured as illustrated. That is, a specific form of distribution and integration of individual devices is not limited to the illustrated form, and all or a part of the configuration can be functionally or physically distributed and integrated in any unit according to various loads, usage conditions, and the like.

Further, some or all of the component, functions, processing units, processing means, and the like described above may be implemented by hardware, for example, by designing them in an integrated circuit. Also, the respective components, functions, and the like described above may be implemented by software for interpreting and executing a program for causing a processor to implement the respective functions. Information such as a program, a table, and a file for implementing the respective functions can be held in a recording device such as a memory, a hard disk, or a solid state drive (SSD), or in a recording medium such as an integrated circuit (IC) card, a secure digital (SD) card, or an optical disc.

### Reference Signs List

10 CPU (processor)
11 Physical core
20 OS
21 Process execution priority management unit
22 Process IO amount recording unit
30 Userland
100, 100A Task scheduler device
110 Dedicated instruction execution detection unit (dedicated instruction detection unit)
120 Dedicated instruction execution affected core identification unit (core identification unit)
130 In-operation process operating frequency performance influence determination unit (performance influence determination unit)
140 Low frequency allowable process allocation determination unit (allowable process determination unit)
150 Process core allocation unit
160 New process startup/low frequency operation possibility determination unit
1000, 1000A Computing system

## Claims

1. A task scheduler device that allocates an execution process of a dedicated instruction specialized for a specific operation to a logical core using hardware multithreading that makes one physical core appear as a plurality of logical cores in a pseudo manner in a computing system that executes the dedicated instruction, the task scheduler device comprising:
a dedicated instruction detection unit configured to detect execution of the dedicated instruction;
a core identification unit configured to identify the logical core which operates on a same physical core as an execution core of the dedicated instruction and whose operating frequency decreases due to the execution of the dedicated instruction;
an allowable process determination unit configured to make a determination to identify a process that satisfies a predetermined performance requirement even when operating at a low frequency with respect to the logical core whose operating frequency decreases, which has been identified by the core identification unit; and
a process core allocation unit configured to allocate the process identified by the allowable process determination unit to the logical core whose operating frequency decreases.

2. The task scheduler device according to claim **1,** wherein
the dedicated instruction detection unit stores a process list using a dedicated instruction, which is registered in advance, compares the process list with a process name being executed, and detects whether or not the dedicated instruction has been executed.

3. The task scheduler device according to claim **1,** wherein
the allowable process determination unit selects, as a pair, a process that may be operated at a low frequency and a core that is affected by the dedicated instruction on a basis of information on a number of the cores affected by the dedicated instruction and information on a performance influence of an operating frequency of each process.

4. The task scheduler device according to claim **1,** comprising:
a performance influence determination unit configured to determine a performance influence of an operating frequency of a process in operation, wherein
the performance influence determination unit compares a process list registered in advance with a process name being executed, and determines the performance influence of the operating frequency of the process in operation.

5. The task scheduler device according to claim 1, comprising:
a performance influence determination unit configured to determine a performance influence of an operating frequency of a process in operation, wherein
the performance influence determination unit acquires an execution priority and a process input/output amount of each process, integrates the execution priority and the process input/output amount to obtain an influence degree, and determines the performance influence of the operating frequency of the process in operation on a basis of the influence degree.

6. A computing system that executes a dedicated instruction specialized for a specific operation, the computing system comprising:
a task scheduler device that allocates an execution process of the dedicated instruction to a logical core using hardware multithreading that makes one physical core appear as a plurality of logical cores in a pseudo manner, wherein
the task scheduler device includes:
a dedicated instruction detection unit configured to detect execution of the dedicated instruction;
a core identification unit configured to identify the logical core which operates on a same physical core as an execution core of the dedicated instruction and whose operating frequency decreases due to the execution of the dedicated instruction;
an allowable process determination unit configured to make a determination to identify a process that satisfies a predetermined performance requirement even when operating at a low frequency with respect to the logical core whose operating frequency decreases, which has been identified by the core identification unit; and
a process core allocation unit configured to allocate the process identified by the allowable process determination unit to the logical core whose operating frequency decreases.

7. A task scheduling method of a task scheduler device that allocates an execution process of a dedicated instruction specialized for a specific operation, the task scheduling method comprising:
a step of detecting execution of the dedicated instruction;
a step of identifying the logical core which operates on a same physical core as an execution core of the dedicated instruction and whose operating frequency decreases due to the execution of the dedicated instruction;
a step of making a determination to identify a process that satisfies a predetermined performance requirement even when operating at a low frequency with respect to the identified logical core whose operating frequency decreases; and
a step of allocating the process identified by the step of making a determination to the logical core whose operating frequency decreases.

8. A program for causing a computer to function as the task scheduler device according to any one of claims 1 to 5.
